# EUROPEAN PATENT APPLICATION

(11) **EP 4 579 501 A1**
(43) Date of publication of application: **02.07.2025**
(21) Application number: 23307396.4
(22) Date of filing: 27.12.2023
(51) Int. Cl.: G06F 21/51, G06F 21/57, G06F 21/64, G06F 21/62

(54) **VIRTUALLY IMMUTABLE FIRMWARE ATTESTATION, RECOVERY, AND RELATED SECURITY**

(71) Applicant: NXP B.V., 5656 AG Eindhoven (NL)
(72) Inventor: Hinkelmann, Markus, 31023 Toulouse (FR); de Perthuis, Hugues Jean Marie, 31023 Toulouse (FR); Legendre, David, 31023 Toulouse (FR)
(74) Representative: Krott, Michel

(57) **Abstract**

A method for secure booting a device having a non-volatile memory (NVM), including: performing a mission mode including: protecting the protected area of the NVM; protecting the scratch area of the NVM; performing a download boot mode including: protecting a protected area of the NVM; performing a protected area integrity checkloading boot patches; applying download firewall settings; and downloading one of a firmware, a scratch page, or firmware and scratch page for the device including an authentication check of the download; performing commit boot mode including: protecting a scratch area of the NVM; applying commit firewall settings; performing a scratch area authenticity check; copying information from the scratch area into the protected area; and protecting the protected area of the NVM.

## Description

### FIELD OF THE DISCLOSURE

Various exemplary embodiments disclosed herein relate to a solution to create virtually immutable firmware (FW) attestation, recovery, and related security functionalities.

### BACKGROUND

The protection against, detection of, and recovery from malware that threatens an integrated circuit (IC) with embedded memory. Mutable executable memory of the IC could be changed in a way that an attacker takes control of the IC. In the worst case an attacker cannot be removed from controlling the IC, then the attacker has gained persistence.

### SUMMARY

A summary of various exemplary embodiments is presented below.

Various embodiments relate to a method for secure booting a device having a non-volatile memory (NVM), including performing a mission mode including: protecting a protected area of the NVM; protecting a scratch area of the NVM; performing a download boot mode including: protecting a protected area of the NVM; performing a protected area integrity checkloading boot patches; applying download firewall settings; and downloading one of a firmware, a scratch page, or firmware and scratch page for the device including an authentication check of the download; performing a commit boot mode including: protecting the scratch area of the NVM; applying commit firewall settings; performing a scratch area authenticity check; copying information from the scratch area into the protected area; and protecting the protected area of the NVM.

Various embodiments are described, wherein performing the mission mode includes receiving a command indicating initiating an application and starting the application.

Various embodiments are described, wherein performing the mission mode includes receiving a command indicating initiating an download mode, setting a boot mode to the download mode, and resetting the device.

Various embodiments are described, wherein performing the mission mode includes receiving a command indicating initiating a commit mode, setting a boot mode to the commit mode, and resetting the device.

Various embodiments are described, wherein performing the mission mode includes: performing boot measurements; and determining a boot measurements response.

Various embodiments are described, wherein performing the mission mode includes: performing a protected area integrity check; and loading boot patches.

Various embodiments are described, wherein performing the mission mode includes: checking an application integrity; applying firewall settings based upon one of application or default firewall settings; and locking a customer factory page in the NVM.

Various embodiments are described, wherein performing the mission mode includes: producing a receive (RX) poll ready notification; and performing an RX poll.

Various embodiments are described, wherein protecting an INFO factory page is performed.

Various embodiments are described, further including: performing hardware initializations; performing an INFO integrity check; and loading INFO patches.

Various embodiments are described, wherein performing the download boot mode includes setting a boot mode to the commit boot mode and resetting the device at an end of the download boot mode.

Further various embodiments relate to a device that is configured to be securely booted, wherein the device includes a non-volatile memory (NVM), including a processor configured to: perform a mission mode including: protect a protected area of the NVM; protect a scratch area of the NVM; perform a download boot mode including: protect a protected area of the NVM; perform a protected area integrity checkloading boot patches; apply download firewall settings; and download one of a firmware, a scratch page, or firmware and scratch page for the device including an authentication check of the download; perform a commit boot mode including: protect the scratch area of the NVM; apply commit firewall settings; perform a scratch area authenticity check; copy information from the scratch area into the protected area; and protect the protected area of the NVM.

Various embodiments are described, wherein performing the mission mode includes receiving a command indicating initiating an application and starting the application.

Various embodiments are described, wherein performing the mission mode includes receiving a command indicating initiating an download mode, setting a boot mode to the download mode, and resetting the device.

Various embodiments are described, wherein performing the mission mode includes receiving a command indicating initiating a commit mode, setting a boot mode to the commit mode, and resetting the device.

Various embodiments are described, wherein performing the mission mode includes: performing boot measurements; and determining a boot measurements response.

Various embodiments are described, wherein performing the mission mode includes: performing a protected area integrity check; and loading boot patches.

Various embodiments are described, wherein performing the mission mode includes: checking an application integrity; applying firewall settings based upon one of application or default firewall settings; and locking a factory page in the NVM.

Various embodiments are described, wherein performing the mission mode includes: producing a receive (RX) poll ready notification; and performing an RX poll.

Various embodiments are described, wherein the processor is further configured to: protect an INFO factory page.

Various embodiments are described, wherein the processor is further configured to: perform hardware initializations; perform an INFO integrity check; and load INFO patches.

Various embodiments are described, wherein performing the download boot mode includes setting a boot mode to the commit boot mode and resetting the device at an end of the download boot mode.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.

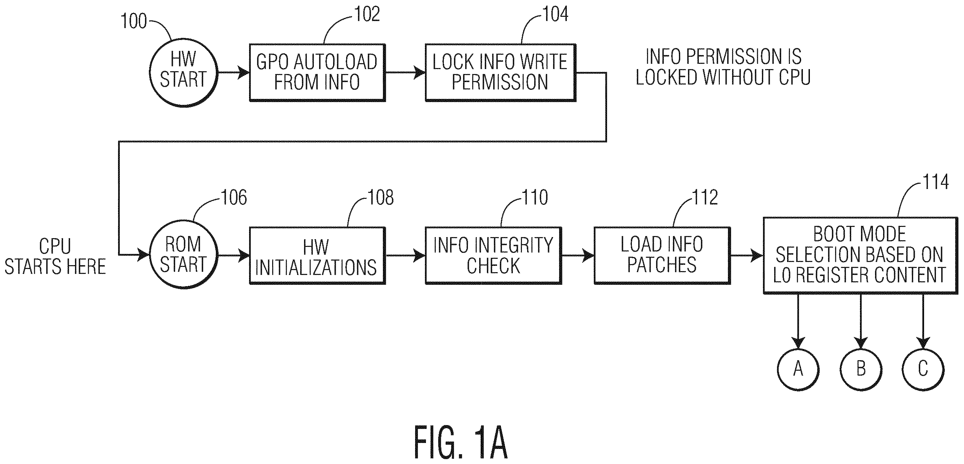

FIGs. 1A-D illustrate a flow diagram of a boot flow according to an embodiment.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of a solution to create virtually immutable firmware (FW) attestation, recovery, and related security functionalities will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

The protection against, detection of, and recovery from malware that threatens an integrated circuit (IC) with embedded memory. Mutable executable memory of the IC could be changed in a way that an attacker takes control of the IC. In the worst case an attacker cannot be removed from controlling the IC, then the attacker gains persistence. Accordingly, solutions to overcome these problems are needed, and embodiments will be described below that provide such solutions.

The elements of the solution include combining the following hardware (HW) and firmware (FW) elements to provide for a non-volatile memory (NVM) based system-on-chip (SOC) solution that solves sufficiently solves the conflicting security requirements of immutability and configurability/patchability for features such as FW upgrade, FW attestation, lifecycle management, and customer factory configuration. The combination of these elements allows for the creation of virtually immutable code section /patches in a tearing safe way

Key problems that are overcome by this solution includes the following two items. The first item includes the fulfilment of security requirements including immutability of boot, FW measurement, and recovery (update). This means that this functionality cannot be patched and updated in the field because it is immutable. This requirement originates from security risk assessments that all mutable code has to be assumed to be potentially under attacker control. The second item includes that for security reasons, the recovery mechanism needs to be updatable.

This challenge is overcome by a staged update mechanism. The first stage includes a patchable secure download that performs authentication and decryption of an update package including patches to the secure download and patchable boot itself. The second stage includes a non-patchable commit with a different download authentication that is immutable (i.e., non-patchable). Passing this stage second stage is also required to activate patches to the secure download in the first stage.

Thus, the secure download/recovery mechanism is patchable, e.g., to mitigate future attacks potentially including physical attacks. At the same point in time the download/recovery mechanism fulfils the requirement that the cryptographic security can rely only on immutable code, and this is achieved by the second stage.

Note that in practice in some situations, when an immutable FW measurement is available, it is sufficient to only check the patches to the download in the second stage (commit).

This problem is now described in more detail. The required security functionality to counter the threat of malware includes the following two items. The first item includes a firmware detection or attestation, e.g., a cryptographic checksum computed over all mutable code either checked internally (detection) or returned to the outside of IC (attestation). Then, by comparing the checksum against a known good value, one can detect whether the integrity of the code in the memory is still ok, or whether a malware potentially infected the device. The second items includes a secure download/recovery mechanism that is able to overwrite the mutable code and therefore evict potential malware infections. The secure download may have to furthermore ensure by itself the authenticity, integrity, and confidentiality of the loaded code.

Sensitive assets in this scenario include mutable code and data on the device and correct functioning of the device.

The considered threats include attacker persistence on the device that leads to permanent denial of service, a permanent change of code or data, or a download of unauthenticated code.

The following are some different means of attack. First, an attacker has full control of all available logical interfaces (system power management interface (SPMI), radio frequency (RF), communication general purpose input/output (GPIO), I2C, etc.) Interfaces that are not connected on the printed circuit board (PCB) or cannot be controlled by logical means are not considered an available logical interface. The assumption is that there is a residual risk that attacker can exploit firmware bugs to take control of a device central processing unit (CPU) once the host interface is open.

Second, because the power connection/reset is typically configurable on the PCB, it is assumed that the attacker can control power and reset. Therefore, attackers may be able to tear operations. Third, attackers cannot modify the PCB. Fourth, physical attacks, side-channel attacks, fault attacks etc. are considered to be out of the scope of this solution.

Further, it is assumed that test and debug interfaces are sufficiently protected or can be protected by a relevant firewall mechanism.

To minimize risk of infection this security functionality should be implemented in immutable code. This means that during operation in the field, the IC enforces HW protection that an attacker cannot change this code nor execution by logical means. Therefore, it is assumed that the attacker has control over all IC interfaces and of all memory that is writable in the field by the IC. This is the worst case assumption. Additionally, it may be required that the detection/attestation as well recovery can be run before any mutable code can be executed in order to limit any impact. Thus, those functionalities may have to be implemented inside of the boot of the IC.

On the other hand the mentioned security functionality can be complex since further requirements need to be fulfilled. For instance: attestation and download require a communication stack, and the download mechanism may involve further security measures like encryption, integrity, authentication; a communication stack might require configuration which are customer specific and thus cannot be stored in read only memory (ROM). Potentially, this configuration needs to be done and locked at the customer or original equipment manufacturer (OEM); and anti-tearing protection. Furthermore, the boot of the IC may also perform some important firewall configuration.

Therefore, it is strongly recommended that the security functionality or parts thereof, e.g., the recovery, are patchable.

The immutability, configurability, and patchability requirements in the previous paragraphs are conflicting requirements. The embodiments disclosed herein aim to solve this conflict such that the functionality becomes virtually immutable.

The embodiments disclosed herein include combining the following HW and FW elements to provide a solution that sufficiently solves the conflicting security requirements of immutability and configurability/patchability. Furthermore, the solution is tearing safe.

The device includes a HW firewall that can write protect NVM areas and lock the configuration until the next reset. This allows creating permanently immutable regions and immutable regions until next reset.

The CPU/System includes a reset with boot reason. This allows evicting any malicious code/influence, resetting the firewall configuration, and passing state information. Thus, a different boot path can be chosen with each boot sequence, and this ensures that there is no malicious influence.

The embodiments include the concept of virtually immutable page called a Protected page. The protected page is a page made immutable by the HW firewall. It can hold patches, e.g., security fixes to secure update functionality in ROM.

The embodiments also include the ability to update the Protected page. This includes a secure download mechanism that cryptographically verifies the signature of a new protected page. The protected page stores the new protected page in a dedicated candidate page called a scratch page. The protected page uses the reset with boot reason to reset the firewall into a specific commit process path.

The commit process path includes the following functionality. The commit process path is implemented in immutable code; it cannot be patched. The commit process path is the only path where the protected page is open to be written. There is no communication or other configuration possibility of this functionality. So there is no potential external influence from an attacker. The commit process path functionality provides an cryptographic signature verification on the scratch page. Optionally, the commit process path may perform a rollback check. Only if the cryptographic signature verification succeeds the scratch page is copied to the protected page.

This particular eviction of potential malware influence, the non-influenced immutable cryptographic signature check, non-influenced copy, and write protection of this protected page in all other boot paths makes the protected page virtually immutable. The signature verification by the secure download mechanism is an additional safeguard to mitigate any residual bug (or future) weakness of the this commit signature check.

The embodiments described herein implement tearing safety. The secure download step can be repeated until there is a valid scratch page in the event of tearing. The commit process may be repeated until the copy from scratch page to protected page succeeds in the event of tearing. Thus, it may be ensured that a valid protected page with patches is made available.

The embodiments described herein implement FW attestation/cryptographic measurement of code (similar to secure boot - if the checksum is verified in the chip, e.g., by a signature check) by implementing the following features. This concept of creating immutable as well as virtually immutable pages/code can be directly used to implement FW attestation, i.e., computing a cryptographic checksum (hash) over relevant code. For the boot path that executes the attestation/measurement the protected page is locked and therefore immutable. The attestation/measurement can compute the cryptographic checksum over code and check the checksum internally or return the checksum to the outside as an attestation value. If there is a mismatch, the code can be recovered by the firmware download/recovery functionality. Therefore, malware can be evicted also from NVM. The attestation/measurement code needs to be implemented in immutable memory. Thus, it can be ensured that this feature is immune against malware influence.

The attestation feature can be split into two or more steps. First the protected page (optionally the scratch) page is attested/measured. This functionality is implemented in immutable memory. Afterwards, the protected page can be trusted. Second, patches/code in protected page can be used in combination with immutable code to attest/check the next stage of memory. This step can be iterated if necessary.

FIGs. 1A-D illustrate a flow diagram of a boot flow according to an embodiment. The flow diagram includes mission, download, and commit modes. Shading indicates the level of trust in the system. The two darkest shades indicate the highest trust as running immutable code. The lightest shade indicates a high trust as running verified patch from protected pages, i.e., virtually immutable code. Once a host interface is open as input, there is a residual risk of attack via a bug or misconfiguration, but it may be observed that all critical areas are locked before an attack happens.

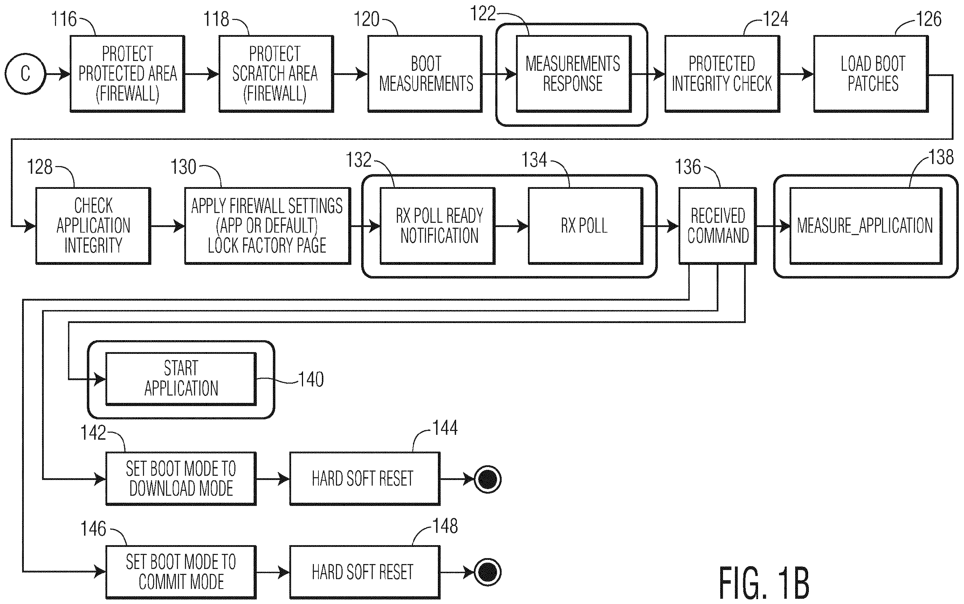

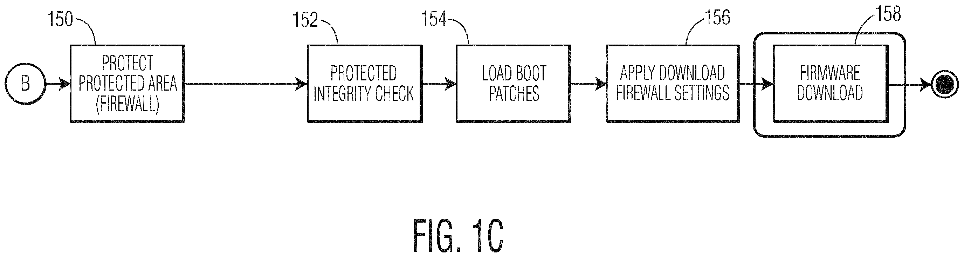

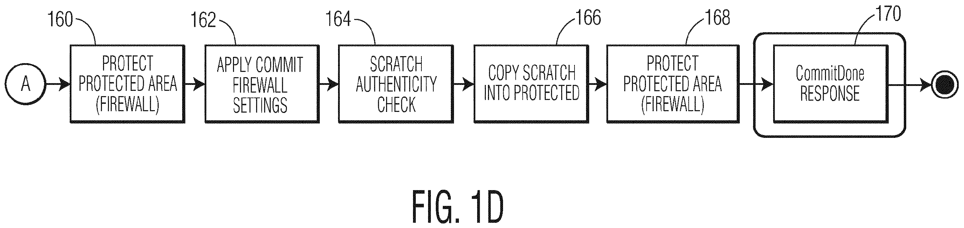

The boot flow begins at step 100 with a HW start. The boot process then auto loads the group policy object (GPO) from INFO factory page at step 102. The INFO factory page is a page that can be programmed at factory and is locked down after factory initialization (step 104). Because this page is permanently locked after factory initialization, it counts as immutable and therefore can be used to patch other immutable code after tape out. Next, the boot process locks the INFO write permission at step 104. It is noted that this is done without the CPU. Next, the boot process starts the CPU by starting the read only memory (ROM) at step 106. Then HW initializations are carried out at step 108. The boot process next performs an INFO integrity check at step 110. It is noted that steps 102, 104, 110, and 112 are optional steps depending on the implementation and whether such factory page needs locking or is used for patching. Then the boot process loads INFO patches at step 112. The boot process then determines what boot mode has been selected at step 114. The boot mode may be based on an L0 register content. There are three potential boot modes: mission mode; commit mode; and download mode. When the boot mode is mission mode, the boot process proceeds to step 116 in FIG. 1B. When the boot mode is a download mode, the boot process proceeds to step 150 in FIG. 1C. When the boot mode is a commit mode, the boot process proceeds to step 160 in FIG. 1D.

In the cold boot mode, the boot process first protects the protected area of the boot device, for example, using a firewall at step 116. Then the boot process protects the scratch area, for example, using the firewall at step 118. It is noted that that after this step and until a next reset, the protected page and scratch page are immutable. Next, the boot process performs boot measurements at step 120. This may, for example, include calculating a cryptographic checksum of sensitive information or code. Then the boot process carries out a measurement response based upon the boot measurement at step 122. It is noted that in other embodiments, steps 120 and 122 are optional and may not be included. This boot measurement may, for example, include comparing to the cryptographic measurement to a known value or output this data such that other entities in the system can check the measurement. The boot process then carries out a protected integrity check at step 124, Next, the boot process loads boot patches at step 126. The boot process then checks the application integrity at step 128. The boot process applies firewall settings to lock a factory page at step 130. These firewall settings may be application based or default values. The boot process at step 132 produces a receive (RX) poll ready notification. The boot process then carries out the RX poll at step 134. This means that the device awaits a command from outside the device. In another embodiment, the device may implement a time window in which it looks for signals that trigger specific actions. The boot process next determines the received boot command at step 132. If a MEASURE APPLICATION command is received during the RX poll, the process carries out the MEASURE_APPLICATION command at step 138. If the application is ready to start, then the boot process starts the application at step 140 based upon an external indication, and the boot process ends.

If the received command indicates the download mode, the boot process sets the boot mode to the download mode at step 142, and starts a hard soft reset at step 144. This will cause the boot process to restart at step 100. If the received command indicates the commit mode, the boot process sets the boot mode to the commit mode at step 146, and starts a hard soft reset at step 148. This will cause the boot process to restart at step 100. In the download boot mode, the boot process first protects the protected area of the boot device, for example, using a firewall at step 150. The boot process then carries out a protected integrity check at step 152. Next, the boot process loads boot patches at step 154. The boot process applies download firewall settings at step 156. The boot process then carries out the firmware download at step 158. This will then cause the boot process to restart at step 100. It is noted that the firmware update can update the scratch page with the intended update for the protected page, and it can do so because the scratch page is not protected. The protected page cannot be changed because it is protected. The firmware download may be a secure firmware download that checks the authenticity of the update. This provides a good barrier against malware. Therefore, the content of the scratch page is checked for integrity and authenticity.

In the commit mode, the boot process first protects the scratch area of the boot device, for example, using a firewall at step 160. The boot process applies commit firewall settings at step 162. The boot process then carries out a scratch authenticity check at step 164. Next, the boot process copies the scratch information into the protected area at step 166. The boot process then protects the protected area, for example, using a firewall at step 168. The boot process next produces the Commit Done response indication at step 170. This will then cause the boot process to restart at step 100.

The boot process and the device may include the following security features.

One feature is that some specific areas of the NVM have specific roles including the following. The factory area includes a INFO factory page that contains configuration data set at factory, such a chip identification (ID), device specific trimmings, ROM patches, etc. These data are never updated in the field.

A protected area includes configuration data which are specific to the current status of device and the current FW stored in the NVM, e.g., FW version, reference values, firewall configuration, patches, etc. This area is updated at every new FW update.

A scratch area contains similar content to the protected area, but is not the active version. It is updated at every successful FW download.

A customer factory area contains configuration information which is specific to the customer application, e.g., host interface settings, and/or to the device, e.g. trimmings. If these settings are modified, the device may be bricked. This area is set by customer at its factory and is never changed in the field

Another feature is a first level HW firewall that can protect specific NVM areas and addresses/registers. Specific areas in non-volatile memory may include, for example, factory area, scratch area, protected area, customer factory area, etc.

Another feature is a second level HW firewall that can be configured to protect arbitrary memory areas or addresses / registers, e.g., using a unified translation look-aside buffer. The first and second level firewall can write protect (may also read/execute protect) the corresponding areas. Furthermore, the first and second level firewall can be locked until next reset of the device. The first level firewall can be locked at the level of each area which is defined in its configuration, whereas the second level firewall can only be locked at the level of complete firewall.

After an area is write protected by a firewall and the corresponding firewall configuration is locked, this area is immutable until next reset of the device because the HW disallows any write access to this area or any re-configuration to enable write access.

Another feature includes reset with boot reason functionality. See for example steps 114, 140, 142, and 146. The HW supports a functionality available to SW that resets the CPU and all configuration done by SW with two exceptions; first, settings that are uncritical for security of the device; and second, a specific register or memory with a value that can be evaluated after the reset by the CPU. This can be used to pass state information to control the next boot path. Therefore, this value is also called the boot reason.

Another feature includes a cryptographic hash, decryption, or signature verification functionality either implemented by HW or by immutable code (in ROM or immutable memory).

Now a number of security features used to create immutable functionality will now be described. The CPU can boot in following modes: mission mode; FW download mode; and commit mode. In the mission mode, code stored in NVM is executed after content of NVM has been measured via cryptographic mean against a reference value. ROM patches from the factory area or protected areas can be applied. However, ROM patches from the protected area are applied only after measurements to prevent execution of tampered ROM patches.

In the FW download mode, after successful authentication, a FW image update is applied to the scratch area and NVM. ROM patches from the INFO or protected areas are applied. Further, the authenticity of the FW image/scratch page is checked by verifying a cryptographic signature before writing to the NVM. In the commit mode, the scratch area is copied to the protected area after additional cryptographic checks. Only ROM patches from the factory area can be applied.

In another feature used to create immutable functionality, a user can switch from one mode to the other one via a command through a host. Alternatively, the device FW can trigger this mode switch be setting a hardware register. This will result in a reset of the device with boot reason register updated to the expected mode. This means that when entering a mode, except for a boot reason, the CPU will start from a clean slate.

Another feature used to create immutable functionality requires that the scratch and protected areas are never opened for write operations simultaneously. Both areas are closed in mission mode. The protected area is closed and the scratch area is open during FW download. The protected area is open and the scratch area is closed during the commit phase. The protected area may be considered as virtually immutable as it is copied only after additional cryptographic checks have been performed. These checks and copy are done via immutable code with the Host Interface uninitialized, so it can be considered as trustable.

Another feature used to create immutable functionality requires that the factory area is always closed to write after leaving the manufacturer's factory. It can be considered as immutable.

Another feature used to create virtually immutable functionality requires that the customer factory area is always closed to write after leaving the customer factory. It can be considered as virtually immutable.

The following security features are used to create anti-tearing. Tearing can happen during a FW download. Depending on the timing, either code/data area or scratch area might be incomplete. If code/data area is teared, this will be detected at the next boot when content of NVM is checked. If the scratch area is teared, this will be detected when a commit mode is performed.

Tearing can happen as well during a commit phase. In that case, the protected area might be incomplete. This will be detected at next boot. If the protected area is teared, the boot ROM will not allow FW download as it could result in tearing of scratch area, so a commit is mandatory.

Table 1 below describes the reasons that tearing may happen and what the next step in response to tearing should be. Tearing may occur in the scratch area or the protected area. The scratch area and the protected area may be either teared or OK. Both the scratch area and the protected area being teared should not happen except in rare circumstances, for example when a cosmic ray strikes the device. When this occurs, the next step is to degrade the download to restore the scratch area. If the scratch area is teared and the protected area is OK, then this may occur when the download is interrupted. In this case, the next step is to enter download mode. If the scratch area is OK and the protected area is teared, then this may occur when the commit mode is interrupted. In this case, the next step is to enter commit mode. If the scratch area is OK and the protected area is OK, but the NVM/code area are incorrect, then this may occur when the download is interrupted. In this case, the next step is to enter download mode. If the scratch area is OK and the protected area is OK, then this may occur when the operation is normal. In this case, the next step is to begin execution or enter download mode.

**Table 1**

| Scratch | Protected | Reason | Next step |
|---|---|---|---|
| Teared | Teared | Should not happen | Degrade download to restore scratch |
| Teared | OK | Download interrupted | Download |
| OK | Teared | Commit interrupted | Commit |
| OK | OK (NVM/code area incorrect) | Download interrupted | Download |
| OK | OK | Normal | Execution or download |

The boot process embodiments described herein intertwine a patchable download and an immutable commit to solve the problem to cryptographically always fully rely on an immutable base and at the same being able to fix security issues to the firmware update/recovery in the future when other implementation attacks, e.g., fault attacks, transition to post quantum cryptography (PQC) etc., occur.

As discussed above, an important aspect of the boot process solution is combining HW and FW elements to provide for NVM based SOC solution that solves sufficiently solves the conflicting security requirements of immutability and configurability/patchability for features such as FW upgrade, FW attestation, lifecycle management, and customer factory configuration. The combination of these elements allows for the creation of a virtually immutable code section/patches in a tearing safe way.

In NVM execution mode measurements are performed before opening the Host interface and ROM patches are applied, so these measurements as well as reaction to wrong values are immutable.

FW download is split between an update of code/data area, scratch area and a commit phase where the scratch area is copied to the protected area. Coupled with the HW protection from a firewall, this ensures that update of protected area can only be done by immutable code. This immutable code can apply specific checks, e.g., additional signature verification, without risk of being bypassed.

The usage of a HW firewall allows for making areas of memory such as the factory area and customer factory area immutable.

Overall, ROM patches can still be applied while code for a critical phase, e.g., measurements and commit, may still be considered as immutable.

The foregoing disclosure provides illustration and description but is not intended to be exhaustive or to limit the aspects to the precise form disclosed. Modifications and variations may be made in light of the above disclosure or may be acquired from practice of the aspects.

As used herein, the term "component" is intended to be broadly construed as hardware, firmware, and/or a combination of hardware and software. As used herein, a processor is implemented in hardware, firmware, and/or a combination of hardware and software.

As used herein, satisfying a threshold may, depending on the context, refer to a value being greater than the threshold, greater than or equal to the threshold, less than the threshold, less than or equal to the threshold, equal to the threshold, not equal to the threshold, and/or the like. It will be apparent that systems and/or methods described herein may be implemented in different forms of hardware, firmware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, the term "non-transitory machine-readable storage medium" will be understood to exclude a transitory propagation signal but to include all forms of volatile and non-volatile memory. When software is implemented on a processor, the combination of software and processor becomes a specific dedicated machine.

Because the data processing implementing the embodiments described herein is, for the most part, composed of electronic components and circuits known to those skilled in the art, circuit details will not be explained in any greater extent than that considered necessary as illustrated above, for the understanding and appreciation of the underlying concepts of the aspects described herein and in order not to obfuscate or distract from the teachings of the aspects described herein.

Unless stated otherwise, terms such as "first" and "second" are used to arbitrarily distinguish between the elements such terms describe. Thus, these terms are not necessarily intended to indicate temporal or other prioritization of such elements.

It should be appreciated by those skilled in the art that any block diagrams herein represent conceptual views of illustrative hardware embodying the principles of the aspects.

While each of the embodiments are described above in terms of their structural arrangements, it should be appreciated that the aspects also cover the associated methods of using the embodiments described above.

Unless otherwise indicated, all numbers expressing parameter values and so forth used in the specification and claims are to be understood as being modified in all instances by the term "about." Accordingly, unless indicated to the contrary, the numerical parameters set forth in this specification and attached claims are approximations that may vary depending upon the desired properties sought to be obtained by embodiments of the present disclosure. As used herein, "about" may be understood by persons of ordinary skill in the art and can vary to some extent depending upon the context in which it is used. If there are uses of the term which are not clear to persons of ordinary skill in the art, given the context in which it is used, "about" may mean up to plus or minus 10% of the particular term.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise.

## Claims

1. A method for secure booting a device having a non-volatile memory (NVM), comprising performing a mission mode including:
protecting a protected area of the NVM;
protecting a scratch area of the NVM;
performing a download boot mode including:
protecting a protected area of the NVM;
performing a protected area integrity checkloading boot patches;
applying download firewall settings; and
downloading one of a firmware, a scratch page, or firmware and scratch page for the device including an authentication check of the download;
performing a commit boot mode including:
protecting the scratch area of the NVM;
applying commit firewall settings;
performing a scratch area authenticity check;
copying information from the scratch area into the protected area; and
protecting the protected area of the NVM.

2. The method of claim 1, wherein performing the mission mode includes receiving a command indicating initiating an application and starting the application.

3. The method of claim 1 or 2, wherein performing the mission mode includes receiving a command indicating initiating an download mode, setting a boot mode to the download mode, and resetting the device.

4. The method of any preceding claim, wherein performing the mission mode includes receiving a command indicating initiating a commit mode, setting a boot mode to the commit mode, and resetting the device.

5. The method of any preceding claim, wherein performing the mission mode includes:
performing boot measurements; and
determining a boot measurements response.

6. The method of claim 5, wherein performing the mission mode includes:
performing a protected area integrity check; and
loading boot patches.

7. The method of claim 6, wherein performing the mission mode includes:
checking an application integrity;
applying firewall settings based upon one of application or default firewall settings; and
locking a customer factory page in the NVM.

8. The method of claim 7, wherein performing the mission mode includes:
producing a receive (RX) poll ready notification; and
performing an RX poll.

9. The method of claim 8, wherein protecting an INFO factory page is performed.

10. The method of claim 9, further comprising:
performing hardware initializations;
performing an INFO integrity check; and
loading INFO patches.

11. The method of any preceding claim, wherein performing the download boot mode includes setting a boot mode to the commit boot mode and resetting the device at an end of the download boot mode.

12. A device that is configured to be securely booted, wherein the device includes a non-volatile memory (NVM), comprising a processor configured to:
perform a mission mode including:
protect a protected area of the NVM;
protect a scratch area of the NVM;
perform a download boot mode including:
protect a protected area of the NVM;
perform a protected area integrity checkloading boot patches;
apply download firewall settings; and
download one of a firmware, a scratch page, or firmware and scratch page for the device including an authentication check of the download;
perform a commit boot mode including:
protect the scratch area of the NVM;
apply commit firewall settings;
perform a scratch area authenticity check;
copy information from the scratch area into the protected area; and
protect the protected area of the NVM.

13. The device of claim 12, wherein performing the mission mode includes receiving a command indicating initiating an application and starting the application.

14. The device of claim 12 or 13, wherein performing the mission mode includes receiving a command indicating initiating an download mode, setting a boot mode to the download mode, and resetting the device.

15. The device of any one of claims 12 to 14, wherein performing the mission mode includes receiving a command indicating initiating a commit mode, setting a boot mode to the commit mode, and resetting the device.

## Amended claims

### Amended claims in accordance with Rule 137(2) EPC.

1. A method for secure booting a device having a non-volatile memory, NVM, comprising performing a mission mode including:
protecting (116) a protected area of the NVM;
protecting (118) a scratch area of the NVM;
performing a download boot mode including:
protecting (150) a protected area of the NVM;
performing (152) a protected area integrity checkloading (154) boot patches;applying (156) download firewall settings; and
downloading (158) one of a firmware, a scratch page, or firmware and scratch page for the device including an authentication check of the download;
performing a commit boot mode (A) including:
protecting (160) the scratch area of the NVM;
applying (162) commit firewall settings;
performing (164) a scratch area authenticity check;
copying (166) information from the scratch area into the protected area; and
protecting (168) the protected area of the NVM; wherein
performing the mission mode, the download boot mode or the commit boot mode depends on a boot mode selection based on L0 register content.

2. The method of claim 1, wherein performing the mission mode includes receiving a command indicating initiating an application and starting (140) the application.

3. The method of claim 1 or 2, wherein performing the mission mode includes receiving a command indicating initiating an download mode, setting a boot mode to the download boot mode, and resetting (144) the device.

4. The method of any preceding claim, wherein performing the mission mode includes receiving a command indicating initiating a commit mode, setting a boot mode to the commit boot mode, and resetting (148) the device.

5. The method of any preceding claim, wherein performing the mission mode includes:
performing (120) boot measurements; and
determining (122) a boot measurements response.

6. The method of claim 5, wherein performing the mission mode includes:
performing (124) a protected area integrity check; and
loading (126) boot patches.

7. The method of claim 6, wherein performing the mission mode includes:
checking (128) an application integrity;
applying (130) firewall settings based upon one of application or default firewall settings; and
locking a customer factory page in the NVM.

8. The method of claim 7, wherein performing the mission mode includes:
producing (132) a receive, RX, poll ready notification; and
performing (134) an RX poll.

9. The method of claim 8, wherein protecting an INFO factory page is performed.

10. The method of claim 9, further comprising:
performing (108) hardware initializations;
performing (110) an INFO integrity check; and
loading (112) INFO patches.

11. The method of any preceding claim, wherein performing the download boot mode includes setting a boot mode to the commit boot mode and resetting the device at an end of the download boot mode.

12. A device that is configured to be securely booted, wherein the device includes a non-volatile memory, NVM, comprising a processor configured to:
perform a mission mode including:
protect (116) a protected area of the NVM;
protect (118) a scratch area of the NVM;
perform a download boot mode including:
protect (150) a protected area of the NVM;
perform (152) a protected area integrity checkloading boot patches;
apply (156) download firewall settings; and
download (158) one of a firmware, a scratch page, or firmware and scratch page for the device including an authentication check of the download;
perform a commit boot mode including:
protect (160) the scratch area of the NVM;
apply (162) commit firewall settings;
perform (164) a scratch area authenticity check;
copy (166) information from the scratch area into the protected area; and protect (168) the protected area of the NVM; wherein
the processor is configured to perform the mission mode, the download boot mode or the commit boot mode depending on a boot mode selection based on L0 register content.

13. The device of claim 12, wherein performing the mission mode includes receiving a command indicating initiating an application and starting the application.

14. The device of claim 12 or 13, wherein performing the mission mode includes receiving a command indicating initiating an download mode, setting a boot mode to the download mode, and resetting the device.

15. The device of any one of claims 12 to 14, wherein performing the mission mode includes receiving a command indicating initiating a commit mode, setting a boot mode to the commit mode, and resetting the device.
